# EUROPEAN PATENT APPLICATION

(11) **EP 1 635 344 A2**
(43) Date of publication of application: **15.03.2006**
(21) Application number: 05108143.8
(22) Date of filing: 06.09.2005
(51) Int. Cl.: G11B 20/00

(54) **Information reproducing apparatus and information reproducing method**

(30) Priority: 09.09.2004 JP 2004262902
(71) Applicant: KABUSHIKI KAISHA TOSHIBA, Tokyo 105-8001 (JP)
(72) Inventor: Ito, Hiroaki Toshiba Corporation, Tokyo, 105-8001 (JP)
(74) Representative: Henkel, Feiler & Hänzel

(57) **Abstract**

An information reproducing method comprises reading (S12) purchase type information and license authentication information, identifying (S20, S24) the read purchase type information, when the purchase type is a rental, transmitting (S26) the read license authentication information to an authentication server to cause the authentication server to perform license authentication, receiving (S28) reproduction time limit information transmitted from the authentication server, when the reproduction time limit is valid, determining (S30) whether or not a key has been acquired, when the key has not been acquired, requesting (S36) a key management server to issue a key, and reproducing (S44) the encrypted content by using the key.

## Description

The present invention relates to an information reproducing apparatus and an information reproducing method for reproducing data from an information recording medium (or information storage medium) such as an optical disk which records contents downloaded via a network.

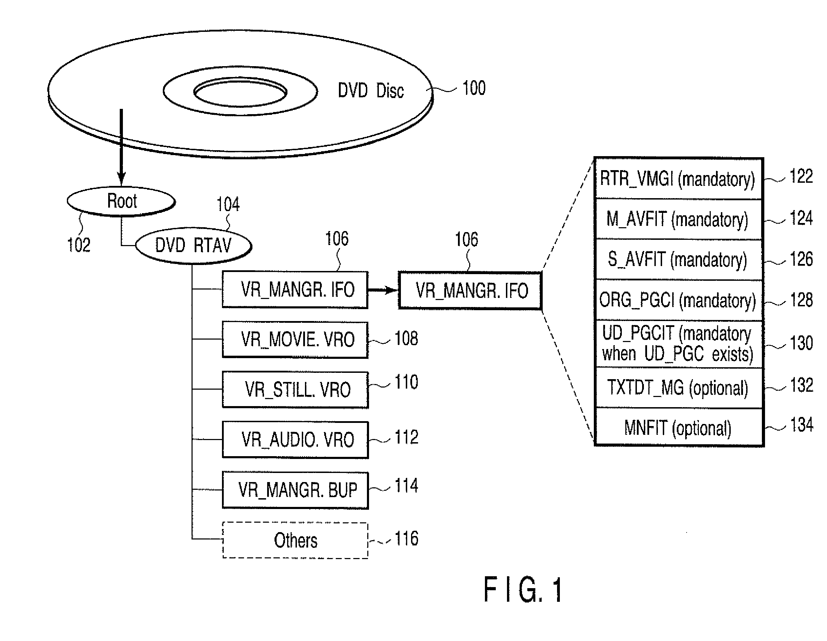

In a conventional content distribution system utilizing a network, in a local device, use right information indicating a license which serves as a use right corresponding to a content is stored in a license storage device. Upon utilization of contents, right information is output from the license storage device to a content utilizing device. Further, the output right information is transmitted to a content distribution server. In the content distribution server, a validity check is executed for the right information. Only when the validity has been successfully verified, the content corresponding to the right information is transmitted from the distribution server to the content utilizing device. The content utilizing device reproduces the received content. The reproduction mode includes: a mode of downloading contents all together and reproducing the contents after stored in a storage medium provided as an accessory or a mode of streaming reproduction and the like (for example, reference is made to Japanese Patent KOKAI Publication No. 2004-133576 (paragraph [0011], paragraph [0044], and paragraphs [0057] to [0077] and FIG. 1).

In this conventional system the contents can be reproduced unlimitedly after downloaded. A mode of purchasing the contents corresponds to a "sell (sales)" for completely transferring the use right. On the other hand, currently, a "rental" mode corresponding to transfer of a user right with a time limit which is widely known in a video tape, CD, and DVD or the like is not fully contemplated. There is a case in which only one reproduction of a content by a person who purchases a content will suffice. A high sales price is set for only one view, and there is a need for a rental mode in which one can view the content at a modest price. However, although the reproduction time limit must be managed in order to achieve a rental mode, the above described system does not have a concept of keeping the reproduction time limit and cannot cope with such a "rental" mode.

As described above, in the conventional content distribution system, there is a disadvantage that the content purchase type is limited to the "sell" and the "rental" mode cannot be supported.

It is an object of the present invention to provide an information reproducing apparatus and an information reproducing method capable of identifying a content required to be reproduced via a network and the other content and carrying out proper reproduction processing according to types of the content.

According to an embodiment of the present invention, an information reproducing method for reproducing information from an information recording medium which records an encrypted content purchased via a network, purchase type information indicating whether a purchase type of the content is a rental with a reproduction time limit or a sell without a reproduction time limit, and license authentication information for reproduction of a rental content, the method comprises:
reading the purchase type information and the license authentication information from the information recording medium;
identifying the read purchase type information;
when the purchase type is a rental, transmitting the read license authentication information to an authentication server to cause the authentication server to perform license authentication;
receiving reproduction time limit information transmitted from the authentication server;
determining whether or not the reproduction time limit is valid;
when it is determined that the reproduction time limit is valid, determining whether or not a key has been acquired;
when it is determined that the key has not been acquired, requesting a key management server to issue a key;
storing in a memory the key transmitted from the key management server; and
reproducing the encrypted content recorded in the information recording medium by using the key stored in the memory.

According to another embodiment of the present invention, an information reproducing apparatus for reproducing information from an information recording medium which records an encrypted content purchased via a network, purchase type information indicating whether a purchase type of the content is a rental with a reproduction time limit or a sell without a reproduction time limit, and license authentication information for reproduction of a rental content, the apparatus comprising:
a memory which stores a key;
a reading unit which reads the purchase type information and the license authentication information from the information recording medium;
an identifying unit which identifies the read purchase type information;
a transmitter which, when the purchase type is a rental, transmits the read license authentication information to an authentication server to cause the authentication server to perform license authentication;
a receiving unit which receives reproduction time limit information transmitted from the authentication server;
a determining unit which determines whether or not the reproduction time limit is valid;
a requesting unit which, when it is determined that the reproduction time limit is valid and a key is not stored in the memory, requests a key management server to issue a key;
a storing unit which stores in the memory the key transmitted from the key management server; and
a reproducing unit which reproduces the encrypted content recorded in the information recording medium by using the key stored in the memory.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a disk logical structure of a DVD-VR standard in an information recording medium according to a first embodiment of the present invention;
FIG. 2 is a view showing a logical structure of a manufacturer information table (MNFIT) 134;
FIG. 3 is a view showing a logical structure of manufacturer information (MNFI) 138;
FIG. 4 is a view showing a whole configuration of an information recording and reproducing apparatus 51 according to one embodiment of the present invention;
FIG. 5 is a view showing a whole configuration of a network distribution type content viewing system in which the information recording and reproducing apparatus 51 of FIG. 4 is used as a content receiver terminal;
FIG. 6 is a flow chart showing a reproducing operation of the information recording and reproducing apparatus 51;
FIG. 7 is a view showing an example of a message "management information error";
FIG. 8 is a view showing an example of a message "no longer valid";
FIG. 9 is a view showing an example of a message "error"; and
FIG. 10 is a view showing how a process for checking a reproduction time limit is carried out.

An embodiment of an information reproducing apparatus and an information reproducing method according to the present invention will now be described with reference to the accompanying drawings.

Although a description will now be given with respect to an embodiment of utilizing a DVD-RAM disk which records information based on a DVD-Video Recording (DVD-VR) standard, another rewritable information recording medium may be used without being limited to this disk. In the present specification, a word "title" designates a title of a masterpiece such as a movie, and a broader concept of the title (a unit of purchase) is referred to as "content". The content may consist of one title or may consist of a plurality of titles.

FIG. 1 shows a disk logical structure of a DVD-VR standard in an information recording medium according to the first embodiment of the present invention. In the DVD-VR standard, a logical structure in a DVD disk 100 comprises a UDF format file system. A DVD_RTAV directory exists under a root directory 102. Under the DVD-RTAV directory 104, there are recorded: a VR management information file (VR_MANGR. IFO) 106; a VR movie information file (VR_MOVIE. VRO) 108; a VR still image information file (VR_STILL. VRO) 110; a VR audio information file (VR_AUDIO. VRO) 112; a VR management information backup file (VR_MANGR. BUP) 114; and any other file 116.

The VR management information file (VR_MANGR. IFO) 106 comprises: RTR (Real Time Recording) video manager information (RTR_VMGI) 122; a movie audio file information table (M_AVFIT) 124; a still audio file information table (S_AVFIT) 126; original program chain information (ORG_PGCI) 128; a user defined program chain information table (UD_PGCIT) 130; a text data manager (TXTDT_MG) 132; and a manufacturer information table (MFFIT) 134. The manufacturer information table (MFFIT) 134 shows a structure of reproduction and recording management information based on the DVD-VR standard, and at the same time, the table shows a recording place of manufacturer information MNFI (Manufacturer's Information) 138.

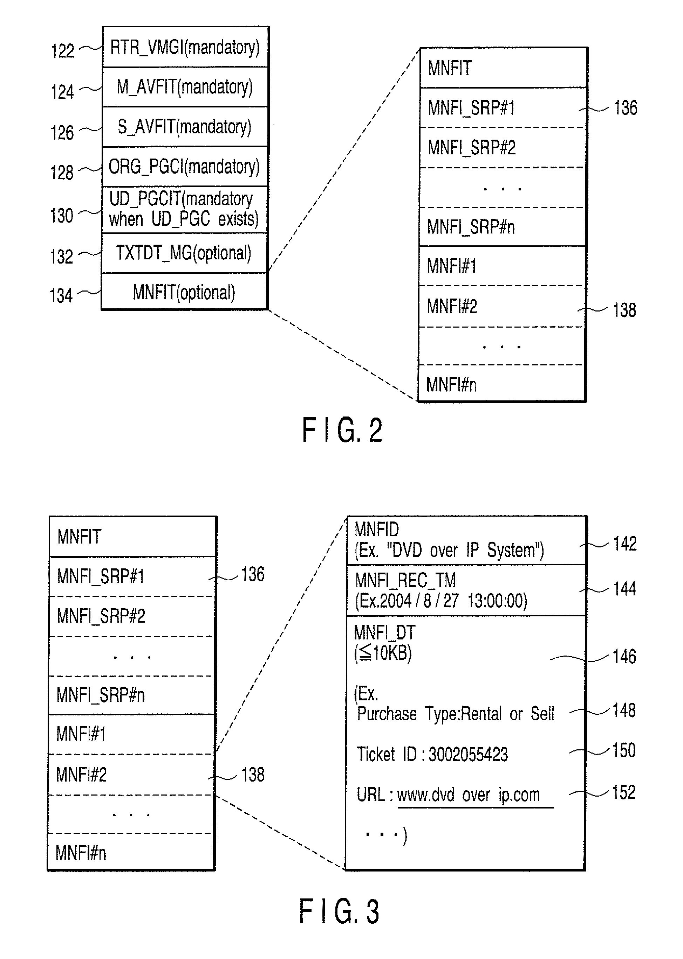

FIG. 2 shows a logical structure of the manufacturer information table (MNFIT) 134. In the manufacturer information table (MNFIT) 134, a plurality (#1 to #n) of manufacturer information (MNFI) 138 and a plurality (#1 to #n) of manufacturer information search pointers (MNFI_SRP) 136 can be recorded. The manufacturer information table (MFFIT) 134 is not mandatory in view of the standard and is a general-purpose information region which a manufacturer can freely utilize within a range of a predetermined capacity. In the present embodiment, information required for reproduction control of contents purchased in a rental format is recorded in this region.

FIG. 3 shows a logical structure of the manufacturer information (MNFI) 138 according to one embodiment of the present invention. The manufacturer information (MNFI) 138 comprises: a manufacturer ID (MNFID) 142; a manufacturer recording time (MNFI_REC_TM) 144; and a manufacturer data table (MNFI_DT) 146.

The manufacturer information data table (MNFI_DT) 146 comprises: a purchase type (Purchase type) 148; a ticket ID (Ticket ID) 150 required for license authentication; and a server address (URL) 152 which manages a license.

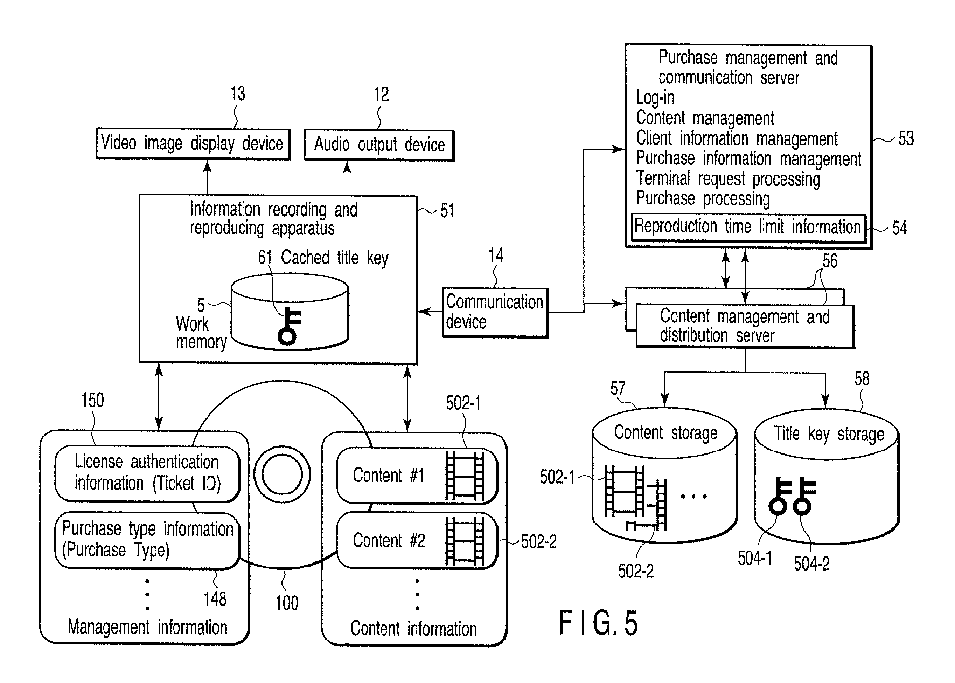

By using the manufacturer information (MNFI) 138, a specific ID can be assigned to a content recorded in a DVD disk 100. An ID (for example, "DVD over IP system") capable of identifying that the content is a specific use mode (for example, reproduction cannot be carried out unless a network distribution type content viewing system described later in FIG. 5 is utilized) is recorded in the manufacturer ID (MNFID) 142, whereby an information recording and reproducing apparatus 51 can carry out processing required to utilize the above described use mode (network distribution type content viewing system).

In the present embodiment, when the information recording and reproducing apparatus 51 downloads a content in a rental mode from a content management and distribution server 56 (shown in FIG. 5) and records the downloaded content in the DVD disk 100, the apparatus records "DVD over IP system" in any manufacturer ID (MNFID) 142 of a plurality of manufacturer information (MNFI #1 to #n) 138. In the present invention, when a rental content is recorded, although it is assumed that only one rental content is recorded in one DVD disk 100 (coexistence with sell contents is not allowed), manufacturer information is assigned on an item of contents basis, and a plurality of rental contents may be recorded.

When the information recording and reproducing apparatus 51 records in the DVD disk 100 the content downloaded in the rental mode, this apparatus records information in any one or more or all items of a plurality of manufacturer information (MNFI #1 to #n). More specifically, the apparatus records "Rental" indicating a rental in the purchase type (Purchase type) 148, receipt information at the time of purchase of the rental content which indicates when and who (a client ID indicates a session number and a procedure name) purchases which content (a content ID) in a which mode (rental or sell) in the ticket ID (Ticket ID) 150 required for license authentication, and an address of a key management server for managing a license in the server address (URL) 152. The content is recorded in the VR movie information file (VR_MOVIE. VRO) 108; the VR still image information file (VR_STILL. VRO) 110; and the VR audio information file (VR_AUDIO. VRO) 112 depending on the type.

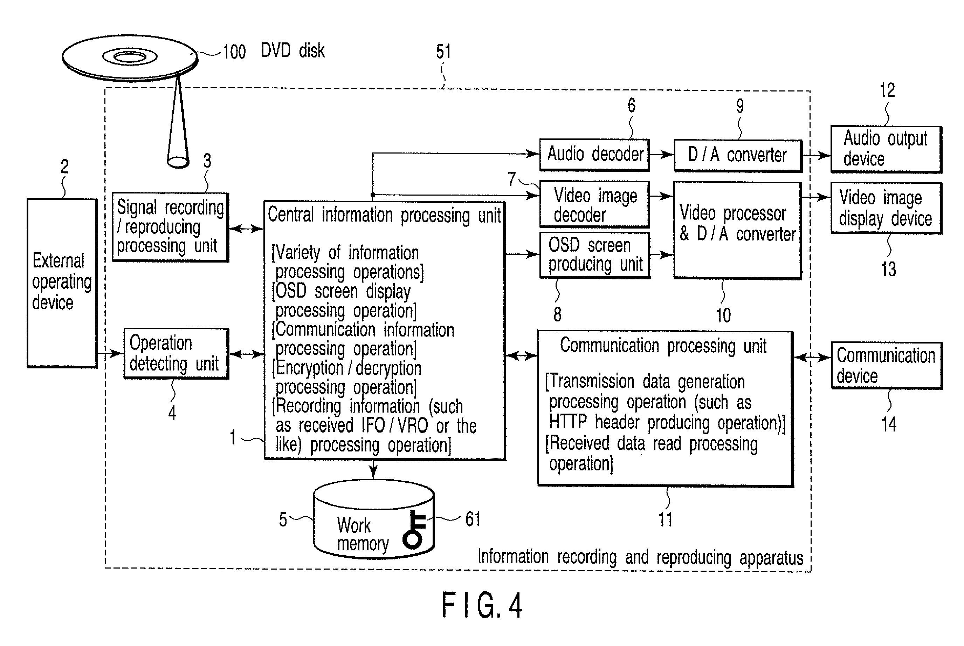

FIG. 4 is a view showing a whole configuration of an information recording and reproducing apparatus 51 according to one embodiment of the present invention. A signal recording/reproducing processing unit 3 can record and/or reproduce information managed by a central information processing unit 1 in/from a DVD disk 100. The information reproduced by the signal recording/reproducing processing unit 3 can be output to a video image display device (TV monitor) 13 and an audio output device (speaker) 12 via the central information processing unit 1. An audio signal is supplied to an audio output device 12 via an audio decoder 6 and a D/A converter 9. A video image signal is supplied to a video processor & D/A converter 10 via a video image decoder 7, and a sub-picture signal is supplied to the video processor & D/A converter 10 via an on-screen display (OSD) screen producing unit 8. The video processor & D/A converter 10 superimposes a sub-picture such as a menu or subtitles on a video image and displays a composite image on a video image display device 13. The central information processing unit 1 carries out a variety of information processing operations such as an OSD screen display processing operation, a communication information processing operation, a decryption processing operation, and a record information processing operation (processing operation of received management information IFO/VRO) or the like. An external operating device 2 such as a remote controller is also connected to the central information processing unit 1 via an operation detecting unit 4.

The information recording and reproducing apparatus 51 can input and output information with respect to an external device via a network in the same way as the apparatus 51 accesses to the DVD disk 100. That is, information input via a communication device (Ethernet) 14 is received by the central information processing unit 1 via a communication processing unit 11. The information produced by the central information processing unit 1 is output to a network via the communication processing unit 11 and the communication device 14. The communication processing unit 11 carries out a transmission data generating operation (such as an HTTP header generating operation) and a receiving data reading operation or the like. A work memory 5 is also connected to the central information processing unit 1 so that the central information processing unit 1 can store processing data temporarily in the work memory 5.

FIG. 5 shows a whole configuration of a network distribution type content viewing system in which the information recording and reproducing apparatus 51 according to the present embodiment is used as a content receiver terminal.

The information recording and reproducing apparatus 51 can purchase a content 502 from a purchase management and communication server 53 via a communication device 14. The purchase type is predetermined as a "sales" mode in which reproduction can be carried out unlimitedly and a "rental" mode in which a reproduction time limit is determined. The purchase management and communication server 53 carries out management of items of information (log-in, content management, client information management, terminal request processing operation, purchase processing operation, and management of reproduction time limit information 54 or the like) relating to a content purchase of the information recording and reproducing apparatus 51.

Encrypted contents 502-1, 502-2, ... are stored in a content storage 57. Title keys 504-1, 504-2, ... for decrypting the encrypted content is stored in a title key storage 58. The content storage 57 and the title key storage 58 are managed by a content management and distribution server 56.

In the case of sell contents, both of an encrypting title and a title key are recorded in the DVD disk 100. In the case of rental contents, the encrypted contents 502-1, 502-2, ... are recorded in the DVD disk 100, but no title key is recorded in the DVD disk 100. The title key can be downloaded from the purchase management and communication server 53 by accessing it every time reproduction is to be carried out.

In the case of reproducing a rental content required to manage a reproduction time limit, the information recording and reproducing apparatus 51 acquires one of title keys 504-1, 504-2, ... for decrypting the encrypted content from the content management and distribution server 56 which manages the title keys 504-1, 504-2, ..., and the acquired title key is stored in the information recording and reproducing apparatus 51. However, the title keys 504-1, 504-2, ... are stored as a cache key 61 in a cache memory incorporated in the work memory 5 without being recorded in the DVD disk 100 which records the encrypted content. The work memory 5 is a volatile memory, and the cache key 61 is erased when the apparatus is turned off or the disk is ejected. The work memory 5 can store only one title key. If a new title key is acquired for the purpose of reproduction of a next title, an old title key is not stored any more.

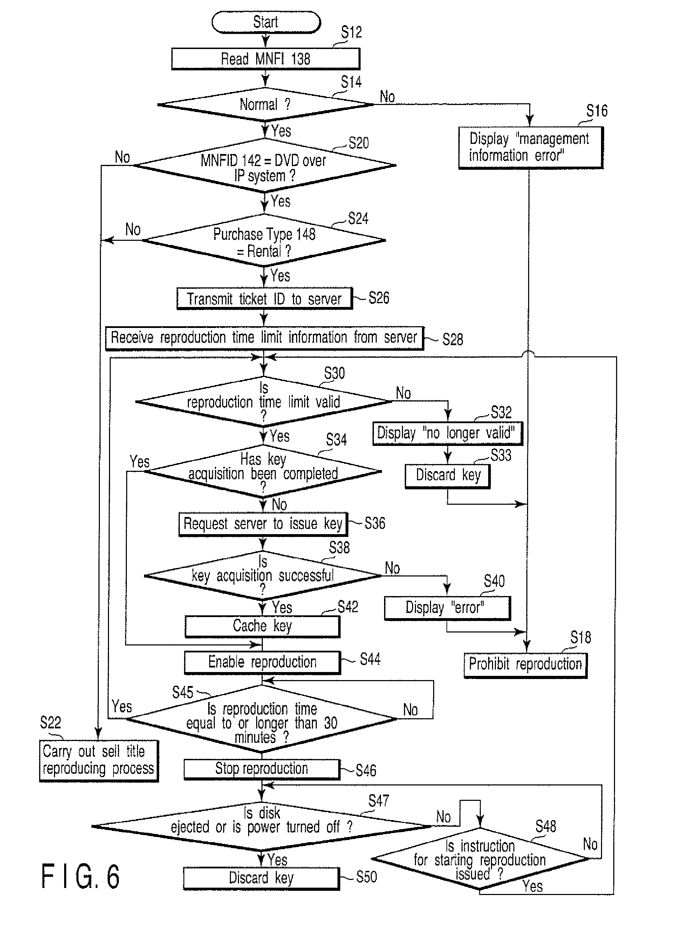

FIG. 6 is a flow chart showing a reproducing operation of the information recording and a reproducing apparatus 51. As described above, it is necessary to acquire the reproduction time limit information 54 and the title key 504 in order to reproduce a rental content 502 a reproduction time limit of which is required to be managed.

First, the information recording and reproducing apparatus 51 reads manufacturer information (MNFI #1 to #n) 138 in step S12 in order to check whether or not the content recorded in the DVD disk 100 for reproduction is a content distributed from a content distribution system (servers 53, 56).

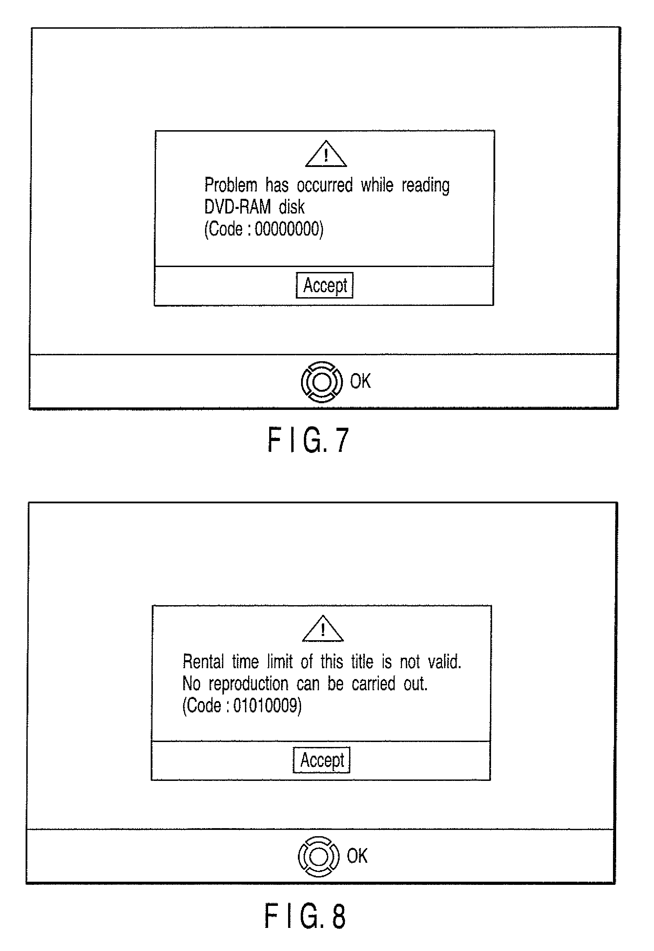

It is determined whether or not the manufacturer information is modified (whether or not the information is normally read) in step S14. When it is determined that the manufacturer information is not normally read in step S14 (the determination result is negative), a message "management information error" is displayed in step S16, and reproduction is prohibited and terminated in step S18. FIG. 7 shows an example of the message "management information error". When a user clicks an acceptance button, the message and an OK button disappears, and a screen is displayed by a predetermined one color (for example, blue).

When it is determined that the manufacturer information is normally read in step S14 (the determination result is affirmative, it is determined whether or not a manufacturer ID (MNFID) 142 recorded as "DVD over IP System" exists in the manufacturer information (MNFI #1 to #n) 138 in step S20. When the manufacturer ID (MNFID) 142 recorded as "DVD over IP System" does not exist in any of the items of manufacturer information (MNFI #1 to #n) 138, it denotes that no rental content is recorded in this disk. Thus, a process for reproducing a sell title is executed in step S22. That is, a title key is read out from the DVD disk 100, and an encrypted content is decrypted.

As a result of a search, when the manufacturer ID (MNFID) 142 recorded as "DVD over IP System" has been found from among items of manufacturer information (MNFI #1 to #n) 138, it is determined whether or not purchase type information 148 included in the items of manufacturer information (MNFI) 138 is rental in step S24. When it is determined that the above information is not a rental (i.e., the information is a sell), a process for reproducing a sell title is executed in step S22.

When it is determined the purchase type is a rental in step S24, ticket ID information 150 for license authentication is transmitted to the content distribution system (servers 53, 56) in step S26.

Then, the content distribution system (servers 53, 56) carries out license authentication. When the authentication has been successful, valid time limit information on a rental content (date information which may include hour, minutes, seconds as required) is transmitted to the information recording and reproducing apparatus 51 (step S28). In the case where authentication has not been successful, though not shown, a message is displayed indicating that no reproduction time limit information is transmitted because authentication fails (as shown in FIG. 7), and reproduction is prohibited and terminated in step S18.

In step S30, the information recording and reproducing apparatus 51 determines whether or not a reproduction time limit is valid. When the determination result is negative, a message "no longer valid" is displayed in step S32, and the title key 61 cached in the work memory 5 is discarded in step S33. Then, reproduction is prohibited and terminated in step S18. FIG. 8 shows an example of the message "no longer valid".

When it is determined that a reproduction time limit is valid in step S30 (the determination result is affirmative), it is determined in step S34 whether or not the title key 61 for decrypting the content has been already cached in the work memory 5. When it is determined that the title key 61 has been already cached in the work memory 5 (the determination result is affirmative), reproduction is enabled immediately in step S44, and then, the encrypted content read out from the DVD disk 100 is decrypted by using the cashed title key. Thus, reduction of a reproduction preparation time and reduction of a burden on a network access can be achieved without unnecessarily downloading a title key of comparatively large size many times. When it is determined that the title key 61 has not been already cached in the work memory 5 (the determination result is negative), a title key 504 for decrypting a content is requested by transmitting a ticket ID 150 to the key management server (content management and distribution server) 56 indicated by URL information 152 in step S36. The content management and distribution server 56 determines whether or not issuance of the title key 504 is enabled. When it is determined that issuance of the title key 504 is enabled (the determination result is affirmative), the title key 504 is transmitted to the information recording and reproducing apparatus 51.

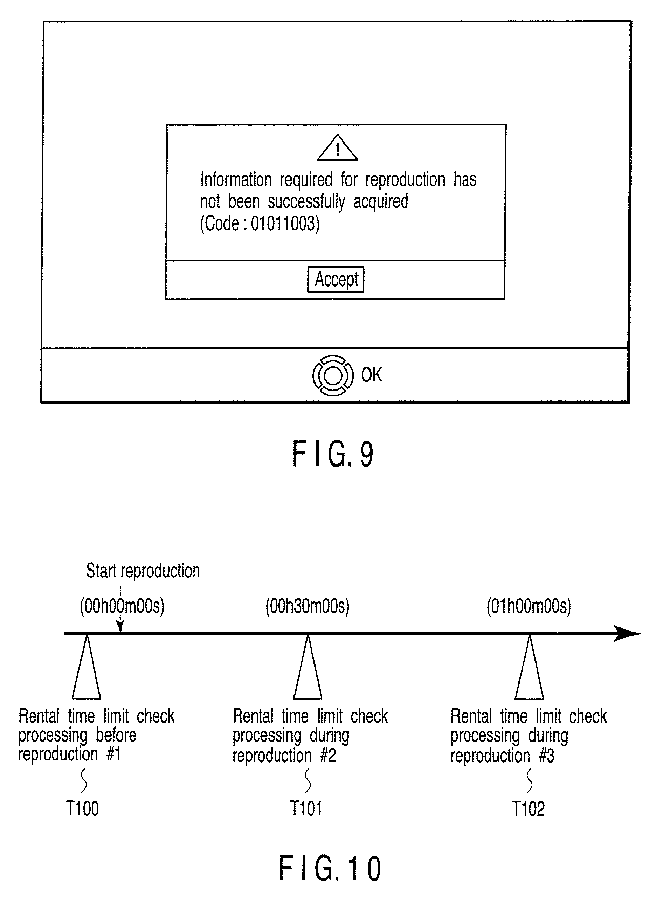

It is determined whether or not a title key has been successfully acquired in step S38. when it is determined that acquisition has failed or when no key has been issued, a message "error (key acquisition error)" is displayed in step S40, and reproduction is prohibited and terminated in step S18. FIG. 9 shows an example of the message "error".

When it is determined that the key has been successfully acquired, the key is cached in the work memory 5 in step S42, and reproduction is enabled in step S44. Then, decrypting is carried out by using the title key having acquired the encrypted content read out from the DVD disk 100.

In order to manage a reproduction time limit during reproduction, it is determined whether or not a reproduction time of 30 minutes has lapsed in step S45. When it is determined that a reproduction time of 30 minutes has lapsed in step S45 (the determination result is affirmative), processing reverts to step S30 in which it is determined whether or not the reproduction time limit is valid. In this case as well, when the reproduction time limit is valid, it is determined whether or not the title key 61 has already been cashed in step S34. When it is determined that the title key 61 has already been cashed in step S34 (the determination result is affirmative), reproduction is continued without acquiring the title key.

If reproduction is stopped in step S46, it is determined whether a disk is ejected or power is turned OFF in step S47. If either of them is detected, it is determined that reproduction of the content has been canceled. Then, the title key 61 cashed in the work memory 5 is discarded in step 550. After reproduction has been stopped, if a reproduction start instruction is detected (YES in step S48), processing reverts to step S30 in which processing is repeated from the determination of whether or not the reproduction time limit is valid.

FIG. 10 shows how a process for checking a reproduction time limit is carried out. In accordance with the flow cart of FIG. 6, before starting reproduction (T100) and during reproduction (T101, T102), a process for checking a rental time limit is carried out. In this way, the rental time limit is checked before starting preparation for reproduction (key request), thus making it possible to prevent a wasteful network access. In addition, the rental time limit is periodically checked after starting reproduction, thus making it possible to reliably control the rental time limit.

As has been described above, according to the present embodiment, information specific to a content distribution system via a network is recorded in a general-purpose information recording medium, thereby making it possible to provide a network distribution type content reproducing system capable of determining whether or not information recorded in this distribution system is stored in the information recording medium, the system enabling reproduction time limit management based on a result of the determination. Thus, when purchase type information is recorded in a recording medium, information required for reproduction can be downloaded via a network with respect to a content required for reproduction via a network. So called "rental" mode content can be distributed via a network.

The present invention is not limited to the above described embodiments, and can be embodied by modifying constituent elements without departing from the spirit of the invention at a stage of carrying out the invention. For example, although a recording medium has been used as a DVD-RAM in the above description, any medium may be used as long as it can carry out recording operation; a DVD-FW, a DVD-R (commercially available), or a hard disk may be used. In addition, while a recording system conforming to a DVD-VR standard has been described, the present invention is not limited to this recording system. In addition, a variety of inventions can be formed according to a proper combination of a plurality of constituent elements disclosed in the above described embodiments. For example, some of all the constituent elements disclosed in the embodiments may be eliminated.

## Claims

1. An information reproducing method for reproducing information from an information recording medium which comprises an encrypted content (502) purchased via a network, purchase type information (148) indicating whether a purchase type of the content is a rental with a reproduction time limit or a sell without a reproduction time limit, and license authentication information (150) for reproduction of a rental content, the method **characterized by** comprising the steps of:
reading (S12) the purchase type information and the license authentication information from the information recording medium;
identifying (S20, S24) the read purchase type information;
when the purchase type is a rental, transmitting (S26) the read license authentication information to an authentication server to cause the authentication server to perform license authentication;
receiving (S28) reproduction time limit information transmitted from the authentication server;
determining (S30) whether or not the reproduction time limit is valid;
when it is determined that the reproduction time limit is valid, determining (S34) whether or not a key has been acquired;
when it is determined that the key has not been acquired, requesting (S36) a key management server to issue a key;
storing (S42) in a memory the key transmitted from the key management server; and
reproducing (S44) the encrypted content recorded in the information recording medium by using the key stored in the memory.

2. The information reproducing method according to claim 1, **characterized by** further comprising the steps of:
determining (S30, S38) whether or not at least one of the purchase type information and the license authentication information read from the information recording medium has been modified; and
when it is determined that at least one of the purchase type information and the license authentication information read from the information recording medium has been modified, notifying (S32, S40) a determination result to a user and prohibiting execution of subsequent processing.

3. The information reproducing method according to claim 1, **characterized by** further comprising a step of:
when it is determined that the reproduction time limit is not valid, notifying (S32) a determination result to a user and prohibiting execution of subsequent processing.

4. The information reproducing method according to claim 1, **characterized by** further comprising the steps of:
determining (S38) whether or not the key transmitted from the key management server has normally been acquired; and
when it is determined that the key transmitted from the key management server has not normally been acquired, notifying (S40) a determination result to a user and prohibiting execution of subsequent processing.

5. The information reproducing method according to claim 1, **characterized in that** the information recording medium comprises a digital versatile disk conforming to a digital versatile disk-video recording standard, and the purchase type information and the license authentication information are recorded in a manufacturer information region included in a management information region.

6. The information reproducing method according to claim 1, **characterized in that** the steps following the step of determining whether or not the reproduction time limit is valid are repeated by every predetermined time during reproduction of content.

7. The information reproducing method according to claim 1, **characterized by** further comprising a step (S50) of erasing the key stored in the memory at least one of when the storage medium is ejected, when power is turned off, and when the reproduction time limit is not valid.

8. An information reproducing apparatus for reproducing information from an information recording medium which comprises an encrypted content (502) purchased via a network, purchase type information (148) indicating whether a purchase type of the content is a rental with a reproduction time limit or a sell without a reproduction time limit, and license authentication information (150) for reproduction of a rental content, the apparatus **characterized by** comprising:
a memory (5) which stores a key;
a reading unit (S12) which reads the purchase type information and the license authentication information from the information recording medium;
an identifying unit (S20, S24) which identifies the read purchase type information;
a transmitter (S26) which, when the purchase type is a rental, transmits the read license authentication information to an authentication server to cause the authentication server to perform license authentication;
a receiving unit (S28) which receives reproduction time limit information transmitted from the authentication server;
a determining unit (S30) which determines whether or not the reproduction time limit is valid;
a requesting unit (S36) which, when it is determined that the reproduction time limit is valid and a key is not stored in the memory, requests a key management server to issue a key;
a storing unit (S42) which stores in the memory the key transmitted from the key management server; and
a reproducing unit (S44) which reproduces the encrypted content recorded in the information recording medium by using the key stored in the memory.

9. The information reproducing apparatus according to claim 8, **characterized by** further comprising:
a determining unit (S14) which determines whether or not at least one of the purchase type information and the license authentication information read from the information recording medium has been modified; and
a notifying unit (S16) which, when it is determined that at least one of the purchase type information and the license authentication information read from the information recording medium has been modified, notifies a determination result to a user and prohibits execution of subsequent processing.

10. The information reproducing apparatus according to claim 8, **characterized by** further comprising:
a notifying unit (S32) which, when it is determined that the reproduction time limit is not valid, notifies a determination result to a user and prohibits execution of subsequent processing.

11. The information reproducing apparatus according to claim 8, **characterized by** further comprising:
a determining unit (S38) which determines whether or not the key transmitted from the key management server has normally been acquired; and
a notifying unit (S40) which, when it is determined that the key transmitted from the key management server has not normally been acquired, notifies a determination result to a user and prohibits execution of subsequent processing.

12. The information reproducing apparatus according to claim 8, **characterized in that** the information recording medium comprises a digital versatile disk conforming to a digital versatile disk-video recording standard, and the purchase type information and the license authentication information are recorded in a manufacturer information region included in a management information region.

13. The information reproducing apparatus according to claim 8, **characterized by** further comprising:
a unit which causes the determining unit to determine whether or not the reproduction time limit is valid by every predetermined time during reproduction of content and which, when it is determined that the reproduction time limit is not valid, notifies a determination result to a user and prohibits execution of subsequent processing.

14. The information reproducing apparatus according to claim 8, **characterized by** further comprising a unit (S50) which erases the key stored in the memory at least one of when the storage medium is ejected, when power is turned off, and when the reproduction time limit is not valid.
